# EUROPÄISCHE PATENTSCHRIFT

(11) **EP 2 306 426 B1**
(45) Veröffentlichungstag und Bekanntmachung des Hinweises auf die Patenterteilung: **19.12.2012**
(21) Anmeldenummer: 09450189.7
(22) Anmeldetag: 01.10.2009
(51) Int. Cl.: G08G 1/015, G08G 1/04, G01S 17/02, G01S 7/48, G01S 17/06, G01S 17/89

(54) **Vorrichtung zur Detektion von Fahrzeugen auf einer Verkehrsfläche**
Device for detecting vehicles on a traffic surface
Dispositif de détection de véhicules sur une voie de circulation

(43) Veröffentlichungstag der Anmeldung: 06.04.2011
(73) Patentinhaber: Kapsch TrafficCom AG, 1120 Wien (AT)
(72) Erfinder: Öhreneder, Christian, 3021 Pressbaum (AT); Ramoser, Herbert, 1020 Wien (AT); Hochstöger, Stefan, 1060 Wien (AT)
(74) Vertreter: Weiser, Andreas

(56) Entgegenhaltungen:
- WO-A1-01/85491
- DE-T2- 60 020 420
- DE-U1-202008 007 078
- US-A1- 2002 140 924
- US-B1- 7 405 812

## Beschreibung

Die vorliegende Erfindung betrifft eine Vorrichtung zur Detektion von Fahrzeugen auf einer Verkehrsfläche gemäß dem Oberbegriff des Anspruchs 1.

Im Bereich der Verkehrstechnik ist es eine wiederkehrende Aufgabe, Fahrzeuge oder allgemeiner Objekte, die sich auf einer Verkehrsfläche befinden, zu erkennen, zu klassifizieren und ihren Bewegungsablauf zu verfolgen. Diese Informationen werden beispielsweise in Mautsystemen verwendet, um die Einhaltung der Mautzahlung zu überprüfen. Die Erkennung und Klassifizierung von Fahrzeugen oder Objekten ist aber auch für die Erkennung von Unfällen oder für die Erstellung von Verkehrsstatistiken notwendig.

Eine bekannte Methode zur Erkennung, Verfolgung und Klassifizierung von Objekten ist die Verwendung von Laserscannern. Die Laserscanner werden über oder seitlich der Fahrbahn montiert und erfassen die Objekte während der Durchfahrt. Ein Nachteil dieser Lösung besteht darin, daß die Laserscanner die Objekte nur in einer Ebene abtasten und daher die vollständige Erfassung der Objekte nur in Verbindung mit der Bewegung der Fahrzeuge möglich ist. Erfolgt die Bewegung der Objekte durch den Scanbereich nicht gleichmäßig, wird die Messung beeinträchtigt. Beispielsweise ist die Messung der Objektlänge dann nicht oder nur ungenau möglich. Speziell bei Verkehrsstaus oder Stop-and-go-Situationen ist dieses Verfahren nicht gut geeignet.

Eine weitere bekannte Lösung besteht darin, die Objekte mit Hilfe von Stereokameras zu erfassen. Bei diesem Verfahren werden die Objekte mit zumindest zwei Kameras aus unterschiedlichen Blickrichtungen erfaßt. Aus der geometrischen Lage korrespondierender Punkte in den Kamerabildern läßt sich die Position der Punkte im dreidimensionalen Raum errechnen. Nachteilig ist, daß für die Berechnung der Entfernung korrespondierende Punkte in den verschiedenen Kamerabildern gefunden werden müssen. Dies ist mit erheblichem Berechnungsaufwand verbunden. Zudem ist die Berechnung nur für Objektpunkte mit lokalen Änderungen des Bildinhalts (Textur) zuverlässig möglich. Auf Flächen mit weitgehend gleichmäßiger Farbe ist keine zuverlässige Messung möglich, sodaß die Entfernungswerte nicht in einem dichten Raster gemessen werden können, sondern nur an speziellen Stellen im Bild.

Schließlich ist es auch bekannt, Objekte mit Kameras zu erfassen. Aus dem Kamerabild alleine ist es jedoch nur ungenau möglich, auf die Position des Objektes im dreidimensionalen Raum zu schließen. Ebenso sind die Vermessung der Objekte und die Bestimmung der Geschwindigkeit nur ungenau möglich.

Eine Vorrichtung der einleitend genannten Art ist aus der DE 20 2008 00 078 U1 bekannt, welche eine in eine Ampel integrierte Time-of-Flight-Kamera (ToF), auch Photomischdetektor-Kamera (photonic mixing devices, PMD) genannt, beschreibt. ToF-Kameras stellen eine neue Gattung von 3D-Bildsensoren dar, welche eine pixelweise Laufzeitmessung des Lichts eines zugeordneten Lichtsenders bekannter Positionen durchführen, wozu Lichtsender und ToF-Empfänger auch entsprechend zeitsynchronisiert sein müssen. Die Signallaufzeitmessung in einem ToF-Pixel erfolgt dabei in der Regel mittels einer Phaseninterferenzmessung zwischen dem empfangenen Lichtsignal und einem dem Pixel als Referenzsignal zugeführten Modulationssignal des Lichtsenders. Für die bekannte Funktionsweise von ToF-Kameras sei beispielsweise auf R. Schwarte et al., "A New Active 3D-Vision System Based on RF-Modulation Interferometry of Incoherent Light", Photonics East-Intelligent Systems and Advanced Manufacturing, Proceedings of the SPIE, Vol. 2588, Philadelphia, 1995, verwiesen.

Die aus der DE 20 2008 007 078 U1 bekannte Vorrichtung ist nicht in der Lage, ein großes Blickfeld mit ausreichender Auflösung abzudecken, z.B. die gesamte Breite einer mehrspurigen Straße. Die Erfindung setzt sich zum Ziel, eine Vorrichtung zur Detektion von Fahrzeugen auf einer Verkehrsfläche zu schaffen, welche die Nachteile des bekannten Standes der Technik überwindet und eine genaue und sichere Erfassung von sowohl bewegten als auch ruhenden Fahrzeugen auf einer großen Verkehrsfläche ermöglicht.

Dieses Ziel wird gemäß der Erfindung mit einer Vorrichtung mit den Merkmalen des Anspruchs 1 erreicht.

Durch die Verwendung eines Verbundes von zumindest zwei ToF-Kameras kann eine vollständige Abdeckung eines sehr großen Blickfelds, z.B. der gesamten Breite einer mehrspurigen Straße, mit der gewünschten Auflösung erreicht werden. Darüberhinaus können mit ein- und denselben Komponenten ohne zusätzlichen Bildverarbeitungsaufwand sowohl der ruhende Verkehr, z.B. auf Parkflächen im Blickfeld der ToF-Kamera, als auch der fließende Verkehr, z.B. auf Fahrstreifen im selben Blickfeld, überwacht werden. Weil die Time-of-Flight-Kameras um ihre Blickachsen jeweils gegenüber der Fahrtrichtung der Verkehrsfläche verdreht angeordnet sind, die Blickfelder der ToF-Kameras rechteckig sind und die Verdrehung in Richtung ihrer Bilddiagonale erfolgt, kann eine entsprechend der Bilddiagonale größere Erfassungsbreite z.B. in Straßenquerrichtung und gleichzeitig auch eine größere Erfassungslänge in Straßenlängsrichtung erreicht werden; gleichzeitig verhindert die Verdrehung, daß z.B. straßenparallele Kanten eines Objekts parallel zum Pixelraster liegen, wodurch Kanten genauer erkannt werden können, wie später noch ausführlicher erörtert wird.

Die Erfindung beruht dabei auf der Erkenntnis, daß zur Erreichung eines hohen Abdeckungsbereichs mehrere Lichtsender verteilt angeordnet werden müssen, um die gesamte Verkehrsfläche ausleuchten zu können. Dabei kann das Problem auftreten, daß sich die Lichtanteile der verschiedenen Lichtsender mischen, beispielsweise aufgrund von überlappenden Lichtkegeln oder Reflexions- oder Streueffekten an Objekten im Blickfeld. Für die korrekte Funktion von ToF-Kameras ist aber eine genaue Kenntnis über den Sendeort des empfangenen Lichts erforderlich. Durch die Trennung der Lichtanteile der einzelnen Lichtsender ist für jede ToF-Kamera eine genaue Zuordnung des empfangenen Lichts zu einem bestimmten Lichtausgangspunkts möglich.

Wie in der Technik bekannt, kann die Trennung der Lichtanteile der einzelnen Lichtsender auf verschiedene Arten erreicht werden. So beschreibt z.B. die US 7 405 812 B1 allgemein ein Verfahren zur Verhinderung gegenseitiger Interferenz von eng benachbarten ToF-Kameras, indem die Lichtsender jeweils mit einem zusätzlichen Rauschanteil moduliert oder mit pseudozufällig wechselnden Modulationsfrequenzen (frequency hopping) betrieben werden. In einer ersten zweckmäßigen Ausführungsform der Erfindung strahlen die Lichtsender Licht unterschiedlicher Wellenlängen ab. Alternativ sind die Lichtsender untereinander und mit den Time-of-Flight-Kameras zeitlich synchronisiert und strahlen ihr Licht für diese abwechselnd ab. Schließlich können die Lichtsender amplitudenmoduliertes Licht mit unterschiedlichem Modulationsmuster, bevorzugt unterschiedlichen Pseudozufallcodes, abstrahlen, sodaß die ToF-Kameras die Lichtanteile der Lichtsender anhand ihres Modulationsmusters unterscheiden können.

Bevorzugt wird vorgesehen, daß sich die Blickfelder der Time-of-Flight-Kameras teilweise überlappen. Dadurch können im Übergangsbereich zwischen zwei ToF-Kameras befindliche Objekte, z.B. fahrspurwechselnde Fahrzeuge, korrekt erfaßt werden.

Besonders günstig ist es, wenn um ihre Blickachse verdrehte ToF-Kameras so eingesetzt werden, daß sich die Blickfelder zweier benachbarter Time-of-Flight-Kameras mit rechteckigen Blickfeldern in den Eckbereichen überlappen, wodurch die Vorteile einer vergrößerten Abdeckungsbreite mit den Vorteilen einer Mehrfacherfassung von Objekten im Überlappungsbereich verbunden werden können.

Gemäß einem weiteren bevorzugten Merkmal der Erfindung wird vorgesehen, daß die Blickachse zumindest einer Time-of-Flight-Kamera schräg von oben oder der Seite auf die Verkehrsfläche in oder entgegen der Fahrtrichtung der Verkehrsfläche gerichtet ist. Dadurch können Objekte frühzeitig erfaßt und über einen längeren Bereich verfolgt werden, wobei aufgrund der Perspektive die Genauigkeit der Erfassung mit zunehmender Nähe zur Kamera zunimmt.

Eine weitere besonders vorteilhafte Ausführungsform der Erfindung zeichnet sich dadurch aus, daß zumindest eine Time-of-Flight-Kamera zusätzlich ein Intensitätsbild der Verkehrsfläche erzeugt und die Auswerteeinrichtung die Entfernungs- und Intensitätsbilder der Verkehrsfläche in Kombination auswertet, um Fahrzeuge auf der Verkehrsfläche zu detektieren. Durch die Kombination von Entfernungs- und Intensitätsinformation, z.B. Helligkeitsinformation, lassen sich Fahrzeuge in den erfaßten Bildern besonders robust abgrenzen und detektieren. So können beispielsweise auch Probleme in Schattenbereichen vermieden werden, in denen die Intensitätsinformation wenig Aussage liefert, oder umgekehrt Probleme in Spiegelungs - oder Totalabsorptionsbereichen, in welchen die Entfernungsmessung beeinträchtigt sein kann und z.B. die Helligkeitsinformation eines Bildes robustere Ergebnisse liefert.

Besonders günstig ist es, wenn zumindest eine Time-of-Flight-Kamera zeitlich aufeinanderfolgende Entfernungs- und gegebenenfalls Intensitätsbilder aufnimmt und die Auswerteeinrichtung in aufeinanderfolgenden Bildern detektierte Objekte wiedererkennt, um ihre Bewegung zu erfassen und daraus Bewegungsparameter und/oder Signalisierungen zu erzeugen. Auf diese Weise lassen sich beispielsweise die Geschwindigkeit und Richtung eines Objekts bestimmen und z.B. Triggersignale für die Verkehrsüberwachung oder -kontrolle ableiten.

Bevorzugt ermittelt die Auswerteeinrichtung aus den Entfernungsbildern Bewegungsparameter der Fahrzeuge, wie Geschwindigkeiten, Verweildauern, Abstandsmessungen usw. für Verkehrsüberwachungs-, Parkgebühren- oder Mautzwecke. Die Auswerteeinrichtung kann die detektierten Fahrzeuge zu diesen Zwecken bevorzugt auch vermessen und/oder klassifizieren, z.B. hinsichtlich Größe, Beladungszustand, Achszahlen usw.

Die Erfindung wird nachstehend anhand von in den beigeschlossenen Zeichnungen dargestellten Ausführungsbeispielen näher erläutert. In den Zeichnungen zeigen
die Fig. 1 und 2 eine erste Ausführungsform der Vorrichtung der Erfindung in einer Vorderansicht und in der Draufsicht;
Fig. 3 ein Flußdiagramm der von der Auswerteeinrichtung durchgeführten kombinierten Auswertung der Entfernungs- und Intensitätsbilder der ToF-Kameras;
Fig. 4 die Blickfelder zweier ToF-Kameras einer weiteren Ausführungsform der Erfindung in der Draufsicht;
Fig. 5 schematisch den Vorteil einer Verdrehung des Pixelrasters einer ToF-Kamera bei Erfassung eines Objekts mit geraden Kanten in der Draufsicht;
die Fig. 6 und 7 die Blickfelder von ToF-Kameras zweier weiterer alternativer Ausführungsformen der Erfindung in der Draufsicht;
Fig. 8 noch eine weitere Ausführungsform der Vorrichtung der Erfindung in einer Vorderansicht;
die Fig. 9 und 10 noch eine weitere Ausführungsform der Vorrichtung der Erfindung in einer Seitenansicht bzw. der Draufsicht;
Fig. 11 das Zusammensetzen eines Gesamt-Entfernungsbildes aus mehreren einzelnen Entfernungsbildern; und
Fig. 12 das Zusammensetzen eines Gesamt-Intensitätsbildes aus mehreren einzelnen Intensitätsbildern.

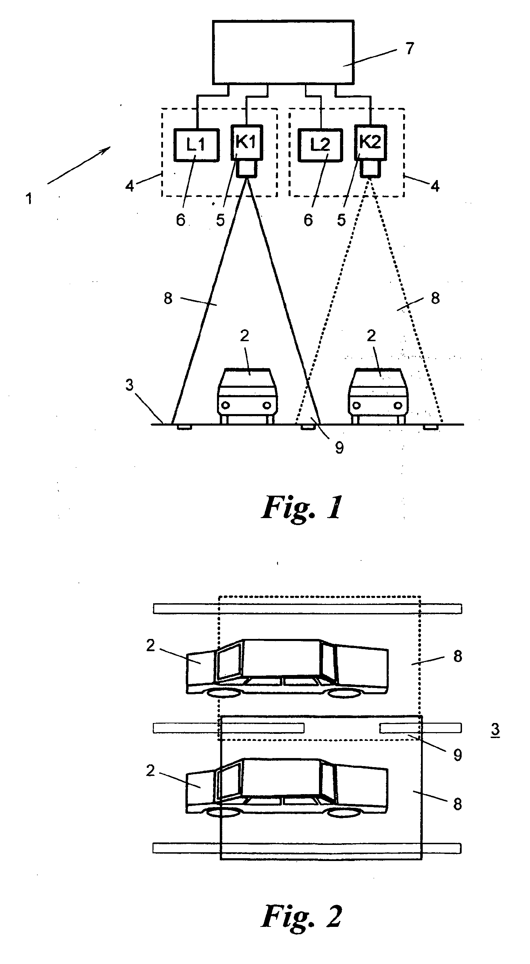

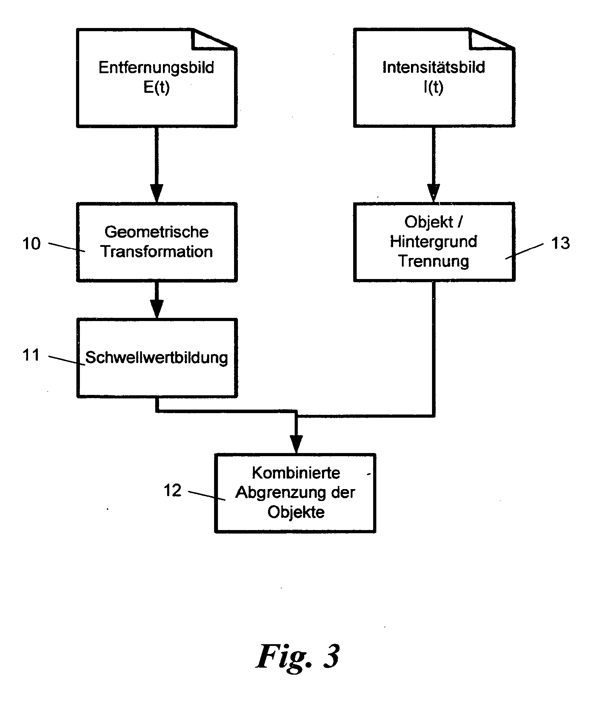

Fig. 1 zeigt eine Vorrichtung 1 zur Detektion von Objekten 2, insbesondere Fahrzeugen, auf einer Verkehrsfläche 3, z.B. einer Straße. Die Vorrichtung 1 umfaßt eine, zwei oder mehrere Einheiten 4 aus jeweils einer Time-of-Flight-Kamera 5 (ToF-Kamera) und einem zugeordneten Lichtsender 6. Die Einheiten 4 mit den ToF-Kameras 5 und den Lichtsendern 6 sind an eine gemeinsame Auswerteeinrichtung 7 angeschlossen, welche die von den ToF-Kameras 5 aufgenommenen Entfernungsbilder E(t), sog. "2,5D-Bilder", und gegebenenfalls zusätzlich Intensitätsbilder I(t), z.B. Helligkeits- oder Farbbilder, auswertet, wie später noch anhand von Fig. 3 näher erläutert wird.

In Fig. 2 sind die Blickfelder 8 zweier ToF-Kameras 5 gezeigt. Die Blickfelder 8 sind hier etwa rechteckig und überlappen sich in einem Randstreifenbereich 9 geringfügig.

Fig. 3 zeigt schematisch ein Beispiel, wie die Auswerteeinrichtung 7 einerseits aus dem Entfernungsbild E(t) und anderseits aus dem Intensitätsbild I(t) einer (oder mehrerer) ToF-Kameras 5 Objekte 2 detektiert und in weiterer Folge vermessen und/oder klassifizieren kann.

Das Intensitätsbild I(t) enthält in jedem Bildpunkt Information über die Helligkeit des abgebildeten Objektpunkts und zeigt das Aussehen der Objekte. Das Entfernungsbild E(t) enthält demgegenüber in jedem Bildpunkt die Entfernung des abgebildeten Objektpunkts zur ToF-Kamera 5 und zeigt somit die Form der Objekte. Die Bildpunkte im Intensitätsbild I(t) entsprechen bevorzugt genau den Bildpunkten im Entfernungsbild E(t), so daß eine gemeinsame Verarbeitung vorteilhaft möglich ist.

Mit Hilfe des Entfernungsbildes E(t) ist es einfach möglich, die Objekte zu detektieren, d.h. insbesondere vom Hintergrund zu trennen, und jedem Objekte genau den räumlichen Bildbereich zuzuordnen, der das jeweilige Objekt zeigt.

Dazu werden in einem ersten Schritt 10 die Entfernungswerte aus dem Bild der ToF-Kamera(s) 5 mit Hilfe einer geometrischen Transformation in Höhenwerte, d.h. in vertikale Abstandswerte des Bildpunktes von der Verkehrsfläche 3, umgerechnet.

In einem zweiten Schritt 11 werden alle Bildpunkte, deren Höhenwerte - unter Berücksichtigung eines Schwellwerts - über der Verkehrsfläche 3 liegen, als mögliche Objektpunkte markiert.

In einem dritten Schritt 12 werden Bildpunkte, die als mögliche Objektpunkte markiert sind, aufgrund ihrer geometrischen Lage zueinander zu Objekten zusammengefaßt. Die Zusammenfassung basiert auf einer Analyse der Nachbarschaft von Objektpunkten. Objektpunkte, die nebeneinander liegen, werden als zu demselben Objekt gehörig angesehen. Die Nachbarschaftsanalyse wird so durchgeführt, daß kleine Bereiche mit fehlerhafter Entfernungsinformation keine Rolle spielen. Zum Beispiel können kleinere Lücken in Objekten, die aufgrund von Meßfehlern im Entfernungsbild entstehen, überbrückt werden.

Besonders vorteilhaft ist es, wenn neben der Entfernungsinformation E(t) auch die Intensitätsinformation I(t), z.B. Helligkeitsinformation, zur Abgrenzung der Objekte verwendet wird.

Dazu können im Schritt 13 die Objekte vom Hintergrund im Intensitätsbild I(t) mit unterschiedlichen bekannten Verfahren getrennt werden, beispielsweise durch Berechnung eines Hintergrundbildes oder durch Analyse der Helligkeitsunterschied zwischen zwei aufeinander folgenden Bildern einer Bildsequenz. Als Ergebnis solcher Verfahren werden die einzelnen Bildpunkte in Vordergrund- und Hintergrundpunkte klassifiziert. Gegebenenfalls werden die Bildpunkte auch noch in weitere Kategorien, z.B. Pixel im Schatten, eingeteilt.

In einem weiteren Schritt werden wiederum die markierten Bildpunkte aufgrund ihrer Nachbarschaft zu Bereichen zusammengefaßt. Dieser Schritt wird vorteilhafter Weise in Kombination mit den markierten Objektpunkten im Entfernungsbild durchgeführt, d.h. im zuvor genannten Schritt 12.

Die Abgrenzung der Objekte anhand der Helligkeitsinformation I(t) in den Bildern setzt einen genügenden hohen Kontrast zwischen Objekt und Hintergrund voraus. Die gebildeten Objekte können dabei unter Umständen in verschieden Teile zerfallen. Durch die Kombination von Helligkeitsinformation I(t) und der Entfernungsinformation E(t) lassen sich die den Objekten zugeordneten Bildbereiche jedoch robuster abgrenzen. So können beispielsweise auch Probleme in Schattenbereichen vermieden werden.

Wenn Objekte Schlagschatten auf die Verkehrsfläche 3, z.B. eine Fahrbahn, werfen, verändert dies die im Bild erfaßte Helligkeitsinformation I(t) und könnte bei einer allein auf der Helligkeitsinformation I(t) basierenden Auswertung dazu führen, daß Objekte falsch erkannt werden oder Verbindungen zwischen Objekten entstehen, die in Wirklichkeit nicht vorhanden sind. In Kombination mit dem Entfernungsbild E(t) lassen sich solche Problem vermeiden, weil im Entfernungsbild E(t) erkannt wird, daß in Bereichen mit Schlagschatten auf der Fahrbahn keine Objekte oberhalb der Fahrbahn vorhanden sind.

Andererseits könnte auch die Entfernungsmessung E(t) alleine beispielsweise durch Spiegelungen auf Objekten (Fahrzeugkarosserien) oder durch Totalabsorption (sehr dunkle Objekte) des Lichts beeinträchtigt sein. In solchen Bereichen kann die zusätzliche Berücksichtigung der Helligkeitsinformation I(t) zu einem robusteren Ergebnis führen.

In Fällen in denen aufgrund der Perspektive Objekte in einem Bild zwar benachbart erscheinen, es aber tatsächlich getrennte Objekte sind, wird im Entfernungsbild E(t) typischerweise ein unstetiger Verlauf der Entfernungsinformation (Tiefeninformation) registriert. Für sich allein genommen ist der Verlauf der Tiefeninformation als Entscheidungskriterium aber nicht immer genug, um Objekte zuverlässig zu trennen. Die gleichzeitige Zuhilfenahme der Helligkeitsinformation I(t) liefert in diesen Fällen ebenfalls zusätzliche Information, die zur Objekttrennung verwendet werden kann. Besteht z.B. neben dem unstetigen Verlauf der Tiefeninformation auch ein Helligkeitsunterschied, der mit der sprunghaften Änderung der Entfernung zusammenfällt, können die Objekte mit erhöhter Sicherheit getrennt werden.

In allen beschrieben Fällen führt die Kombination von Helligkeitsinformation und Entfernungsinformation daher zu einer deutlichen Erhöhung der Robustheit der Objekterkennung.

Eine weitere Funktion der Auswerteeinrichtung 7 kann darin bestehen, Objekte in aufeinanderfolgenden Bildern einer Bildsequenz wiederzuerkennen und somit einen Bezug zwischen Objekten in verschiedenen Bildern herzustellen. Auch hier stellt die kombinierte Auswertung des Entfernungs- und Intensitätsbildes E(t), I(t) einen großen Vorteil dar, weil die Objekte nicht nur anhand ihres Aussehens, sondern auch anhand ihrer Form wiedererkannt werden können.

Durch die Verfolgung der Objekte über mehrere Bilder hinweg können die Bewegung der Objekte erfaßt und daraus Bewegungsparameter, z.B. die Geschwindigkeit, der Abstand zwischen Objekten, die Verweildauer an einem bestimmten Ort usw., abgeleitet werden. Auch hier besteht ein wesentlicher Vorteil gegenüber Kameras, die nur Intensitätsbilder liefern können: Ohne Entfernungsinformation wäre es nur ungenau möglich, aus der Bewegung von Objekten im Bild auf deren Bewegung im dreidimensionalen Raum zu schließen. Objekte, die weit entfernt sind, bewegen sich aufgrund der Perspektive im Bild langsamer als gleich schnell bewegte Objekte, die näher bei der Kamera sind. Nutzt man die Entfernungsinformation E(t) aus, kann die Geschwindigkeit der Objekte im Bild in eine Geschwindigkeit im dreidimensionalen Raum umgerechnet werden.

Weites ist es möglich, auf Basis der Position und der Bewegung von Objekten Signale zu generieren, um andere Meßsysteme zu aktivieren. In einer Anwendung zur Kontrolle der Straßenmaut können beispielsweise Kennzeichenlesekameras ausgelöst werden, wenn die Fahrzeugfront eine bestimmte Linie auf der Straße überschreitet.

Durch die Verfolgung der Objekte 2 in einer Bildsequenz kann weiters auch eine Verbesserung der Meßgenauigkeit erzielt werden, indem Form und Aussehen eines Objektes mehrfach erfaßt und die Ergebnisse mehrerer Messungen kombiniert werden. Die einzelnen Bilder einer Sequenz zeigen bei einem bewegten Objekt unterschiedliche Ansichten eines Fahrzeugs. Objektteile, die in einem Bild verdeckt sind, können in einem anderen Bild sichtbar sein. Durch die Verfolgung der Objekte und der damit gegebenen Zuordnung der Informationen aus unterschiedlichen Bildern zu einem Objekt lassen sich die Daten der Einzelaufnahmen zu einem genaueren und vollständigeren Datensatz des Objektes kombinieren.

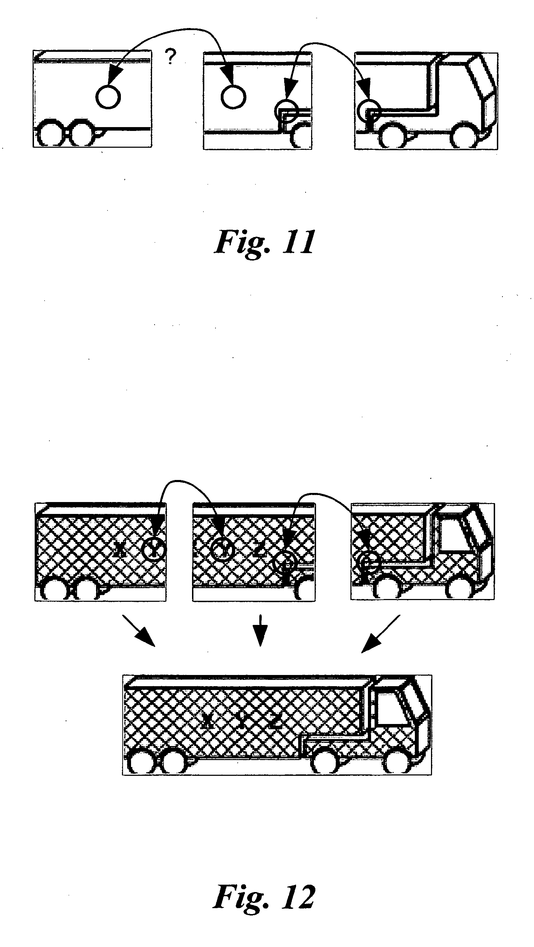

Auf dieselbe Weise ist es auch möglich, große Objekte wie Lastkraftwagen, die nicht vollständig in einer einzigen Aufnahme enthalten sind, durch Zusammenfügen aus mehreren Ansichten vollständig zu erfassen. Die Entfernungs- und Intensitätsinformation E(t), I(t) erlaubt es, die einzelnen Teilansichten richtig zusammenzusetzen und so bei großen Objekten trotzdem die äußeren Abmessungen korrekt zu bestimmen: Denn bei der Erfassung von großen Objekten durch mehrere Entfernungs- und Intensitätsbilder besteht das Problem, die Bildausschnitte lagerichtig zusammenzusetzen, so daß das zusammengesetzte Bild das Objekt richtig darstellt. Im Entfernungsbild ist das oft nicht oder nur mit ungenügender Genauigkeit möglich, weil insbesondere auf planaren Flächen nicht genügend charakteristische Merkmale für die Bildzuordnung vorhanden sind, siehe Fig. 11. Das Intensitätsbild weist demgegenüber in der Regel wesentlich mehr Textur auf, siehe Fig. 12. Durch die kombinierte Auswertung von Entfernungsbild und Intensitätsbild werden die Vorteile beider Varianten kombiniert, indem die Bildzuordnung entweder auf Basis der Entfernungsinformation kombiniert mit der Intensitätsinformation durchgeführt wird oder nur auf Basis der Intensitätsinformation und dann auf die Entfernungsbilder übertragen wird. Dieses Verfahren ist - mit rechnerisch etwas höherem Aufwand - auch möglich, wenn die Intensitätsbilder nicht von der Time-of-Flight Kamera aufgenommen werden, sondern von einer separaten Standardkamera.

Neben der Detektion bzw. Abgrenzung der Objekte können die erfaßten Entfernungs- und Helligkeitsinformationen auch für die Klassifizierung und Verfolgung der Objekte verwendet werden. Wenn zuvor eine Objektverfolgung und eine Datenverbesserung durchgeführt wurden, können vorteilhafterweise die durch Mehrfachmessung in unterschiedlichen Bildern verbesserten Entfernungs- und Intensitätsbilder für die Klassifizierung herangezogen werden. Für die Klassifizierung der Objekte werden aus den Entfernungsbilder E(t) charakteristische Merkmale, wie die geometrischen Abmessungen (Länge, Höhe, Breite), der Beladungszustand, die Achszahl usw., ermittelt. Darüber hinaus kann die Form des Objektes aus den Entfernungsdaten und sein Aussehen aus der Helligkeitsinformation verwendet werden, um das Objekt mit Methoden der Mustererkennung einer Objektklasse (z.B. PKW, LKW, etc.) zuzuweisen.

Durch die inhärente Verknüpfung der Bildinformation mit dreidimensionalen Koordinaten ist es auch möglich, Meßergebnisse weiterer Sensoren einem mit einer ToF-Kamera detektierten Objekt zuzuordnen und die Daten gemeinsam zu verarbeiten. So ist es z.B. möglich, Intensitätsbilder von "normalen", nicht-entfernungsmessenden Kameras mit den Daten von entfernungsmessenden ToF-Kameras zu verknüpfen. Weiter ist es möglich, Kommunikationsdaten, wie sie bei der Straßenmaut erfaßt werden, aufgrund des räumlichen Bezugs den erfaßten Objektdaten zuzuordnen.

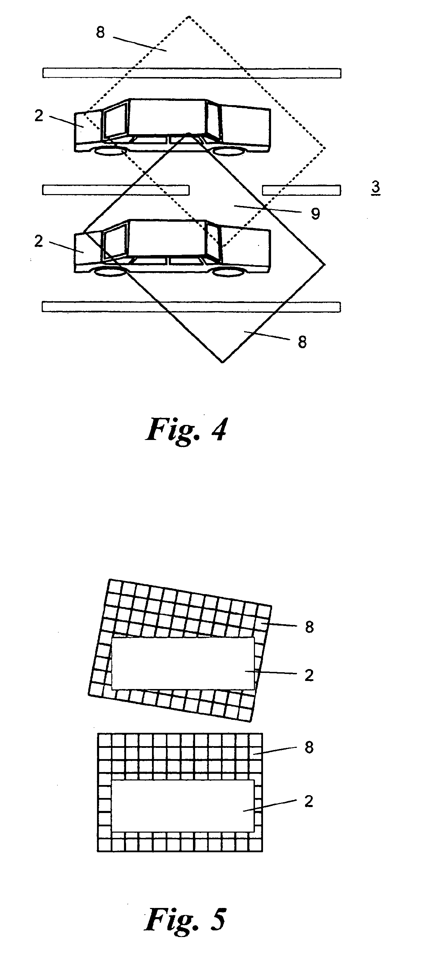

Fig. 4 zeigt eine weitere vorteilhafte Anordnung, bei der die ToF-Kameras 5 um ihre Blickachse gegenüber der nominellen Fahrtrichtung von Fahrzeugen als Objekte 2 verdreht sind. Es ist nur der Grundriß dargestellt. Im Grundriß ist der Sichtbereich der ToF-Kameras 5 auf die Verkehrsfläche 3 eingezeichnet. In dieser Anordnung wird der größere Öffnungswinkel von ToF-Kameras 5 mit rechteckigem Blickfeld in der Bilddiagonalen ausgenützt. Das heißt, man nutzt die Ecken des Bildes einerseits aus, um Fahrzeuge früher zu erfassen (Bildecken reichen stärker in Fahrtrichtung), und andererseits um eine größere seitliche Überlappung zu erzielen (Bildecken verursachen einen größeren lateralen Bildöffnungswinkel).

Fig. 5 zeigt, daß die Verdrehung der ToF-Kameras 5 auch für die Erhöhung der Meßgenauigkeit vorteilhaft sein kann. Die zu vermessenden Objekte 2 auf der Straße weisen oftmals einen rechteckigen Grundriß auf. Dies führt bei einem parallel zur Straße ausgerichteten Pixelraster des Blickfelds 8 dazu, daß im Bild E(t) bzw. I(t) Kanten des Objekts 2 parallel zum Pixelraster zu liegen kommen und die Phasenlage zwischen einer Objektkante und dem Raster dabei über die Länge der Kante weitgehend konstant ist, siehe Fig. 5 unten. Wenn die Kanten wie in Fig. 5 oben dargestellt nicht parallel zum Pixelraster zu liegen kommen, überdeckt die Kante jeweils einen unterschiedlichen Flächenanteil der einzelnen Pixel. Durch Mittelwertbildung läßt sich dann die Position der Kanten viel genauer bestimmen.

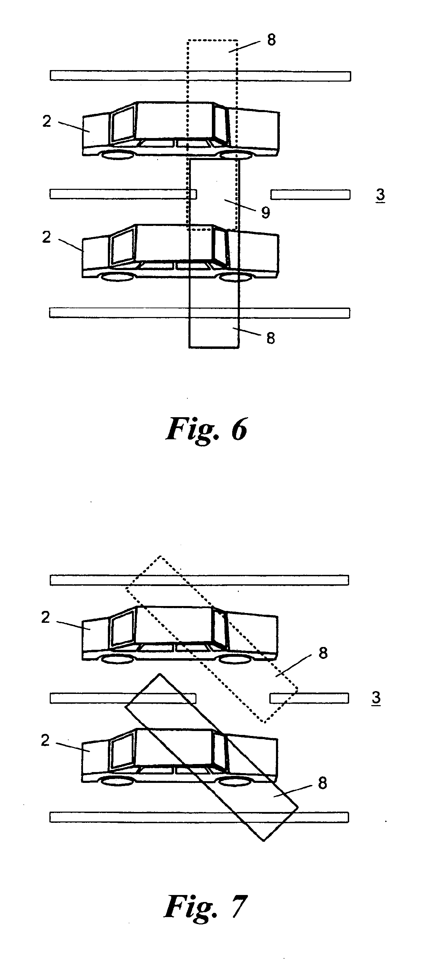

Fig. 6 zeigt eine weitere vorteilhafte Anordnung, in der die Blickfelder 8 der ToF-Kameras 5 auf schmale Streifen reduziert sind. Diese Anordnung ist ähnlich der Verwendung von Laserscannern, die Objekte nur in einer Ebene erfassen. Durch den reduzierten Erfassungsbereich der ToF-Kameras 5 ist weniger Lichtleistung zur Beleuchtung erforderlich. Außerdem können ToF-Kameras mit weniger Bildelementen (Pixel) eingesetzt werden, was wiederum den Vorteil hat, daß solche Kameras größere Bildelemente haben können und damit empfindlicher sind. Als Vorteil gegenüber Laserscannern ergibt sich, daß die gesamte Meßebene gleichzeitig erfaßt wird und daß das Meßsystem keine bewegten Teile (rotierende Spiegel) benötigt.

Eine vorteilhafte Variante der Anordnung von Fig. 6 ist in Fig. 7 dargestellt. Auch hier werden - so wie in Fig. 4 - die ToF-Kameras 5 um ihre Blickachse verdreht montiert. Diese Anordnung kann z.B. für das in dem Patent EP 1 454 164 beschriebene Meßverfahren eingesetzt werden und hat auch alle dort genannten Vorteile. Beispielsweise ermöglicht diese Anordnung eine Messung der Geschwindigkeit, obwohl nur ein schmaler Streifen des Fahrzeugs erfaßt wird.

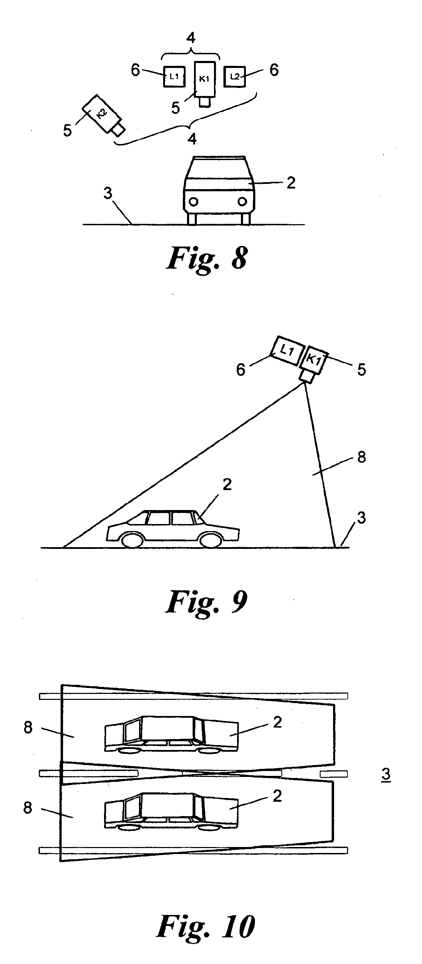

Fig. 8 zeigt, daß die ToF-Kameras 5 nicht notwendigerweise eine parallele Blickachse haben müssen, sondern beispielsweise auch unter unterschiedlichen Winkeln auf die Verkehrsfläche 3 gerichtet sein können. Auch können die den einzelnen ToF-Kameras 5 jeweils zugeordneten Lichtsender 6 an unterschiedliche Punkten montiert sein, um z.B. Abschattungen zu vermeiden.

An dieser Stelle sei erwähnt, daß die den einzelnen ToF-Kameras 5 jeweils zugeordneten und in ihren Lichtanteilen voneinander getrennten Lichtsender 6 nicht notwendigerweise durch physisch voneinander getrennten Lichtquellen gebildet sein müssen. So könnte beispielsweise für zwei ToF-Kameras auch ein und dieselbe Lichtquelle verwendet werden, welche im Zeitmultiplexbetrieb, d.h. jeweils zeitlich abwechselnd für eine der ToF-Kameras 5 betrieben wird und so die diesen ToF-Kameras zugeordneten Lichtsender bildet.

Die Fig. 9 und 10 zeigen noch eine weitere vorteilhafte Anordnung, bei welcher die ToF-Kameras 5 in Richtung des herannahenden Verkehrs schräg von oben auf die Verkehrsfläche 3 gerichtet werden. Die ToF-Kameras 5 haben beispielsweise ein längliches Bildformat von 4:1. Fahrzeuge 2 können damit sehr frühzeitig erfaßt und dennoch über einen längeren Bereich verfolgt werden. Die Genauigkeit der Messung ist am Beginn des Erfassungsbereichs geringer und nimmt gegen Ende des Erfassungsbereichs mit zunehmender Nähe zur Kamera zu. Durch die Verfolgung der Objekte in einer Bildsequenz und der damit gegebenen Zuordnung der Informationen aus unterschiedlichen Bildern zu einem Objekt lassen sich damit beide Aspekte, eine frühzeitig Erfassung und eine genaue Entfernungsmessung, vorteilhaft kombinieren. Sinngemäß läßt sich diese Anordnung auch so nutzen, daß die Kamera entgegen der Fahrrichtung schräggestellt wird.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Vorrichtung (1) zur Detektion von Fahrzeugen (2) auf einer Verkehrsfläche (3), **gekennzeichnet durch** zumindest zwei mit zugehörigen Lichtsendern (6) zusammenwirkende Time-of-Flight-Kameras (5) zum Erzeugen von unterschiedlichen Entfernungsbildern (E(t)) der Verkehrsfläche (3), welche an eine gemeinsame Auswerteeinrichtung (7) zur Detektion von Fahrzeugen (2) in den Entfernungsbildern (E(t)) angeschlossen sind und oberhalb der Verkehrsfläche angeordnet sind , wobei die Lichtsender (6) ausgeführt sind, unterschiedliches, nur von der jeweils zugehörigen Time-of-Flight-Kamera (5) detektierbares Licht abzustrahlen, und wobei die Time-of-Flight-Kameras (5) jeweils rechteckige Blickfelder (8) haben, die in Bezug auf die ursprüngliche Ausrichtung, bei der die längeren Seiten des rechteckigen Blickfeldes parallel zur Fahrtrichtung der Verkehrsfläche ausgerichtet sind, um ihre Blickachsen verdreht angeordnet sind.

2. Vorrichtung nach Anspruch 1, **dadurch gekennzeichnet, daß** die Time-of-Flight-Kameras (5) zueinander parallelversetzte Blickachsen haben.

3. Vorrichtung nach Anspruch 1 oder 2, **dadurch gekennzeichnet, daß** sich die Blickfelder (8) der Time-of-Flight-Kameras (5) teilweise überlappen.

4. Vorrichtung nach Anspruch 3, **dadurch gekennzeichnet, daß** sich die Blickfelder (8) zweier benachbarter Time-of-Flight-Kameras mit rechteckigen Blickfeldern in den Eckbereichen überlappen.

5. Vorrichtung nach einem der Ansprüche 1 bis 4, **dadurch gekennzeichnet, daß** die Blickachse zumindest einer Time-of-Flight-Kamera (5) schräg von oben oder der Seite auf die Verkehrsfläche (3) gerichtet ist.

6. Vorrichtung nach einem der Ansprüche 1 bis 5, **dadurch gekennzeichnet, daß** zumindest eine Time-of-Flight-Kamera (5) zusätzlich ausgeführt ist, ein Intensitätsbild (I(t)) der Verkehrsfläche (3) zu erzeugen und die Auswerteeinrichtung (7) ausgeführt ist die Entfernungs- und Intensitätsbilder (E(t), I(t)) der Verkehrsfläche (3) in Kombination auszuwerten, um Fahrzeuge (2) auf der Verkehrsfläche (3) zu detektieren.

7. Vorrichtung nach einem der Ansprüche 1 bis 6, **dadurch, gekennzeichnet, daß** zumindest eine Time-of-Flight-Kamera (5) ausgeführt ist, zeitlich aufeinanderfolgende Entfernungs- und gegebenenfalls Intensitätsbilder (E (t), I(t)) aufzunehmen und die Auswerteeinrichtung (7) ausgeführt ist, in aufeinanderfolgenden Bildern detektierte Objekte (2) wiederzuerkennen, um ihre Bewegung zu erfassen und daraus Bewegungsparameter und/oder Signalisierungen zu erzeugen.

8. Vorrichtung nach einem der Ansprüche 1 bis 7, **dadurch gekennzeichnet, daß** die Auswerteeinrichtung (7) ausgeführt ist, aus den Entfernungsbildern (E(t)) Bewegungsparameter der Fahrzeuge ermittel.

9. Vorrichtung nach einem der Ansprüche 1 bis 8, **dadurch gekennzeichnet, daß** die Auswerteeinrichtung (7) ausgeführt ist, die detektierten Fahrzeuge (2) zu vermessen und/oder zu klassifizierert.

## Claims

1. Device (1) for detecting vehicles (2) on a traffic area (3), **characterised by** at least two time-of-flight cameras (5) cooperating with associated light transmitters (6) for generating different distance images (E(t)) of the traffic area (3), which cameras are connected to a common evaluation device (7) for detecting vehicles (2) in the distance images (E(t)) and are arranged above the traffic area, wherein the light transmitters (6) are configured to radiate different light that is only detectable by the respectively associated time-of-flight camera (5), and wherein the time-of-flight cameras (5) respectively have rectangular viewing fields (8), which are arranged rotated around their viewing axes in relation to the original orientation, in which the longer sides of the rectangular viewing field are oriented parallel to the direction of travel of the traffic area.

2. Device according to claim 1, **characterised in that** the time-of-flight cameras (5) have viewing axes displaced parallel to one another.

3. Device according to claim 1 or 2, **characterised in that** the viewing fields (8) of the time-of flight cameras (5) partially overlap one another.

4. Device according to claim 3, **characterised in that** the viewing fields (8) of two adjacent time-of-flight cameras with rectangular viewing fields overlap in the corner regions.

5. Device according to one of claims 1 to 4, **characterised in that** the viewing axis of at least one time-of flight camera (5) is oriented at an angle from above or from the side onto the traffic area (3).

6. Device according to one of claims 1 to 5, **characterised in that** at least one time-of flight camera (5) is additionally configured to generate an intensity image (I(t)) of the traffic area (3) and the evaluation device (7) is configured to evaluate the distance and intensity images (E(t)), (I(t)) of the traffic area (3) in combination in order to detect vehicles (2) on the traffic area (3).

7. Device according to one of claims 1 to 6, **characterised in that** at least one time-of flight camera (5) is configured to record consecutive distance and, where applicable, intensity images (E(t)), (I(t)) and the evaluation device (7) is configured to recognise detected objects (2) again in consecutive images in order to detect their movement and generate movement parameters and/or signal indications therefrom.

8. Device according to one of claims 1 to 7, **characterised in that** the evaluation device (7) is configured to determine movement parameters of the vehicles from the distance images (E(t)).

9. Device according to one of claims 1 to 8, **characterised in that** the evaluation device (7) is configured to measure and/or classify the detected vehicles (2).

## Revendications

1. Dispositif (1) de détection de véhicules (2) sur une surface de circulation (3), **caractérisé par** au moins deux caméras de temps de vol (5) qui entrent en interaction avec des émetteurs de lumière (6) associés afin de générer différentes images de distance (E(t)) de la surface de circulation (3), qui sont raccordées à un système d'évaluation (7) commun en vue de la détection de véhicules (2) dans des images de distance (E(t)) et qui sont disposées au-dessus de la surface de circulation, les émetteurs de lumière (6) étant mis en oeuvre pour rayonner une lumière différente pouvant être détectée uniquement par la caméra de temps de vol (5) associée et les caméras de temps de vol (5) ayant chacune des champs de vision (8) rectangulaires qui sont disposés tournés autour de leur axe de vision par rapport à l'orientation originelle selon laquelle les plus grands côtés du champ de vision rectangulaire sont orientés parallèlement au sens de circulation de la surface de circulation.

2. Dispositif selon la revendication 1, **caractérisé en ce que** les caméras de temps de vol (5) ont des axes de vision décalés parallèlement les uns par rapport aux autres.

3. Dispositif selon la revendication 1 ou 2, **caractérisé en ce que** les champs de vision (8) des caméras de temps de vol (5) se recouvrent partiellement.

4. Dispositif selon la revendication 3, **caractérisé en ce que** les champs de vision (8) de deux caméras de temps de vol voisines ayant des champs de vision rectangulaires se recouvrent dans les zones d'angle.

5. Dispositif selon l'une quelconque des revendications 1 à 4, **caractérisé en ce que** l'axe de vision d'au moins une caméra de temps de vol (5) est dirigé en biais du haut ou de côté sur la surface de circulation (3).

6. Dispositif selon l'une quelconque des revendications 1 à 5, **caractérisé en ce qu'**au moins une caméra de temps de vol (5) est mise en oeuvre en plus pour générer une image d'intensité (I(t)) de la surface de circulation (3) et **en ce que** le système d'évaluation (7) est mis en oeuvre pour évaluer en combinaison les images de distance et les images d'intensité (E(t), I(t)) de la surface de circulation (3) afin de détecter des véhicules (2) sur la surface de circulation (3).

7. Dispositif selon l'une quelconque des revendications 1 à 6, **caractérisé en ce que** au moins une caméra de temps de vol (5) est mise en oeuvre pour prendre des images de distance et le cas échéant des images d'intensité (E(t), I(t)) se succédant dans le temps et **en ce que** le système d'évaluation (7) est mis en oeuvre pour reconnaître des objets (2) détectés dans des images successives afin de déterminer leur mouvement et de générer à partir de cela des paramètres de mouvement et/ou des signalisations.

8. Dispositif selon l'une quelconque des revendications 1 à 7, **caractérisé en ce que** le système d'évaluation (7) est mis en oeuvre pour déterminer des paramètres de mouvement des véhicules à partir des images de distance (E(t)).

9. Dispositif selon l'une quelconque des revendications 1 à 8, **caractérisé en ce que** le système d'évaluation (7) est mis en oeuvre pour mesurer et/ou classer les véhicules (2) détectés.
